# EUROPEAN PATENT APPLICATION

(11) **EP 2 336 221 A1**
(43) Date of publication of application: **22.06.2011**
(21) Application number: 10194529.3
(22) Date of filing: 10.12.2010
(51) Int. Cl.: C08G 73/02, C08L 79/02, B29C 70/28, B29C 70/48, C08J 5/04, C09D 179/02

(54) **Curable compositions**

(71) Applicant: Henkel AG & Co. KGaA, 40589 Düsseldorf (DE)
(72) Inventor: Schönfeld Rainer, 40221 Düsseldorf (DE); Kreiling Stefan, 69214 Eppelheim (DE); Chao Liu, 08193 Cerdanyola del Vallès Barcelona (ES); Dongmei Shen, 08193 Cerdanyola del Vallès Barcelona (ES); Rosa Maria Sebastian Pérez, 08193 Cerdanyola del Vallès Barcelona (ES); Jordi Marquet cortés, 08193 Cerdanyola del Vallès Barcelona (ES)

(57) **Abstract**

The subject matter of the present application is a curable composition comprising at least one polymerization catalyst selected from salts comprising at least one lithium cation and at least one inorganic and/or organic cation in combination with at least one polymerizable benzoxazine compound. The curable compositions of the present invention exhibit a long pot-live and a low processing viscosity at temperatures of 125°C or less and can be cured at relatively low temperatures, preferably at temperatures in the range of about 130°C to about 160°C in short time periods, preferably within a time period of about 5 min to 5 hours.

## Description

The present invention relates to a curable composition, comprising a catalyst selected from salts, comprising a least one lithium cation and at least one inorganic and/or organic anion, and at least one benzoxazine resin as well as to the respective cured compositions. Furthermore, the invention relates to a process for producing cured reaction products which are infused with a plurality of fabric plies or unidirectional plies, in which the special catalysts are used.

Various catalysts for the polymerization and curing reaction of benzoxazines have been reported. Examples include phenols (JP2000-178332A), amines (JP2000-86863A), imidazoles (JP 2000-178332A), and phosphines (JP 2003-82099A). WO-A1-2009/115488 discloses the use of metal complexes of an organic sulfur containing acid as catalysts for benzoxazine systems.

Polymerization and curing reactions with latent/activatable catalysts or initiators, which start the polymerization and curing reaction by an appropriate external stimulus, can offer a method for controlled polymerizations, especially for the control of the initiation step. In most of the cases the non-cured system is exposed to temperatures in the range of 180°C for 45 minutes or even longer to initiate the curing process while ensuring that the conversion of the monomers reaches 100%. However depending on the additional components of the non-cured system or the environment in which the curing takes place, it is favorable if the curing temperature can be lowered and/or the curing time can be shortened.

Notwithstanding this state of technology there was still a demand for catalysts which allow a controlled and complete polymerization of benzoxazine monomers at lower temperatures and/or within shorter curing times.

Therefore it was one object of the present invention to provide new catalysts for benzoxazine-based formulations, which allow that the non-cured formulations exhibit a long pot-life and a low processing viscosity at temperatures of 125°C or less. Furthermore it was an object of the present invention to provide new catalysts for benzoxazine-based formulations, which can be cured at relatively low temperatures, preferably at temperatures in the range of about 130°C to about 160°C in short time periods.

The inventors of the present invention surprisingly found, that curable compositions, comprising at least one benzoxazine resin and at least one salt, comprising a least one lithium cation and at least one inorganic and/or organic anion, can advantageously be used as matrix resins in advanced composite part fabrication processes, such as resin transfer molding processes (RTM), vacuum assisted resin transfer molding processes (VARTM), and resin infusion processes and the like.

Therefore, the present invention provides a curable composition, comprising
a. at least one polymerization catalyst selected from salts comprising a least one lithium cation and at least one inorganic and/or organic anion and
b. at least one polymerizable benzoxazine compound.

The curable composition of the present invention exhibits a long pot-life and a low processing viscosity at temperatures of 125°C or less and can be cured at relatively low temperatures, preferably at temperatures in the range of about 130°C to about 160°C in short time periods, preferably within a time period of about 5 min to about 5 hours.

The curable compositions are in particular suitable as matrices for the preparation of reinforced material such as prepregs and towpregs and/or can be used in injection molding or extrusion processes.

Therefore it is another aspect of the invention to provide a cured reaction product of the curable composition of the present invention, in particular a cured reaction product comprising a plurality of fabric plies or unidirectional plies. It is further provided a process of preparing such material.

In a further aspect of the present invention the at least one lithium salt of the present invention is used as a heat-activatable catalyst for the curing reaction of benzoxazine resins.

The curable composition of the present invention comprises at least one benzoxazine resin.

The benzoxazine compound can be any curable monomer, oligomer or polymer comprising at least one benzoxazine moiety. Preferably monomers containing up to four benzoxazine moieties are employed as the benzoxazine compound in form of single compounds or mixtures of two or more different benzoxazines.

In the following a broad spectrum of different suitable benzoxazine compound, containing one to four benzoxazine moieties are presented.

One possible benzoxazine compound may be embraced by the following structure (B-I): 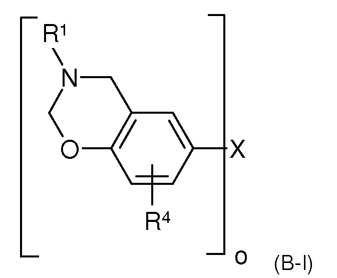 where o is 1 to 4, X is selected from a direct bond (when o is 2), alkyl (when o is 1), alkylene (when o is 2-4), carbonyl (when o is 2), oxygen (when o is 2), thiol (when o is 1), sulfur (when o is 2), sulfoxide (when o is 2), and sulfone (when o is 2), R¹ is selected from hydrogen, alkyl, alkenyl and aryl, and R⁴ is selected from hydrogen, halogen, such as fluorine, chlorine, bromine or iodine, alkyl and alkenyl, or R⁴ is a divalent residue creating a naphthoxazine residue out of the benzoxazine structure.

The term "alkyl" as used in the present invention denotes branched and unbranched alkyl groups, preferably with 1 to 40 carbon atoms. Preferred are alkyl groups with 1 to 4 carbon atoms. Examples include: methyl, ethyl, n-propyl, iso-propyl, n-butyl, iso-butyl, sec-butyl, tert-butyl, n-pentyl, iso-pentyl, neo-pentyl or hexyl. The definitions propyl, butyl, pentyl and hexyl include all possible isomeric forms of the groups in question. Thus, for example, propyl includes n-propyl and iso-propyl, butyl includes iso-butyl, sec-butyl and tert-butyl etc. Unless otherwise stated, the alkyl groups may be substituted by one or more groups preferably selected from methyl, ethyl, iso-propyl, tert-butyl, hydroxy, fluorine, chlorine, bromine and iodine.

The term "alkenyl" as used in the present invention denotes branched and unbranched alkenyl groups, preferably with 3 to 40 carbon atoms. Preferred are alkenyl groups with 3 to 5 carbon atoms. Examples include: propenyl, butenyl, pentenyl, or hexenyl. Unless otherwise stated, the definitions propenyl, butenyl, pentenyl and hexenyl include all possible isomeric forms of the groups in question. Thus, for example, propenyl includes 1-propenyl and 2-propenyl (allyl), butenyl includes 1-, 2- and 3-butenyl, 1-methyl-1-propenyl, 1-methyl-2-propenyl etc.

The term "aryl" as used in the present invention denotes aromatic ring systems, preferably with 6 to 40 carbon atoms. Examples include: phenyl, naphthyl and anthracenyl, the preferred aryl group being phenyl and napthyl. Unless otherwise stated, the aromatic groups may be substituted by one or more groups preferably selected from among methyl, ethyl, iso-propyl, tert-butyl, hydroxy, alkoxy, such as methoxy or ethoxy, fluorine, chlorine, bromine, iodine and nitro.

More specifically, within structure (B-I) the benzoxazine compound may be embraced by the following structure (B-II): 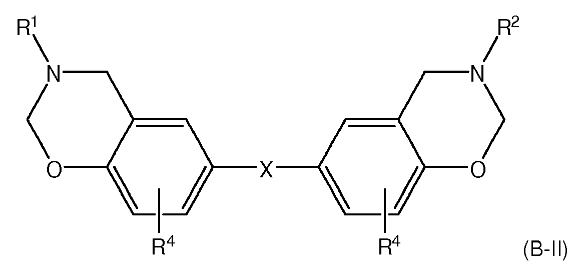 where X is selected from a direct bond, CH₂, C(CH₃)₂, C=O, O, S, S=O and O=S=O, R¹ and R² are the same or different and are selected from hydrogen, alkyl, such as methyl, ethyl, propyls and butyls, alkenyl, such as allyl, and aryl, and R⁴ are the same or different and defined as above.

Representative benzoxazine compound within structure (B-II) include: 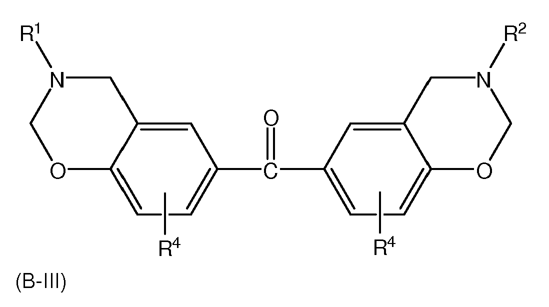 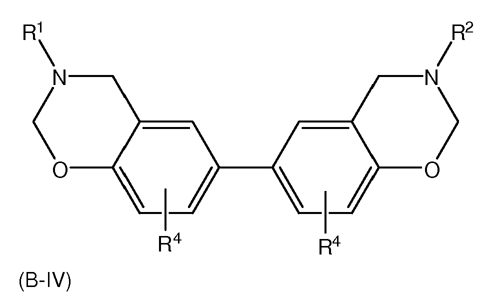 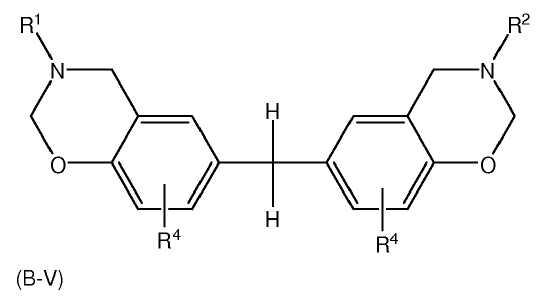 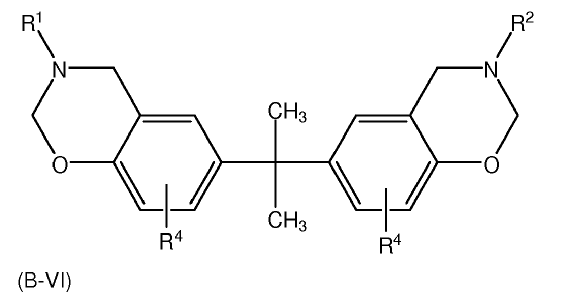 wherein R¹, R² and R⁴ are as defined above.

Alternatively, the benzoxazine compound may be embraced by the following structure (B-VII): 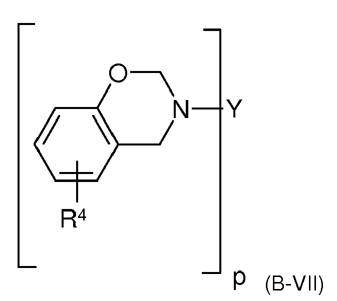 wherein p is 2, Y is selected from biphenyl, diphenyl methane, diphenyl isopropane, diphenyl sulfide, diphenyl sulfoxide, diphenyl sulfone, and diphenyl ketone, and R⁴ is selected from hydrogen, halogen, alkyl and alkenyl.

Though not embraced by structures (B-I) or (B-VII) additional benzoxazine compounds are within the following structures: 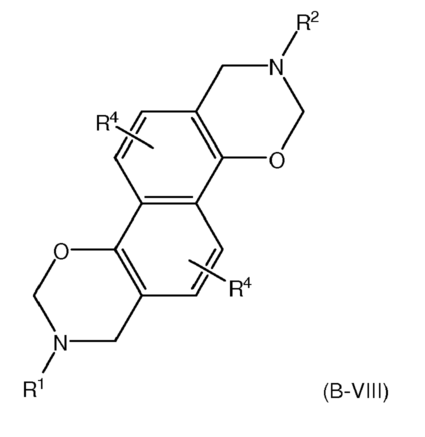 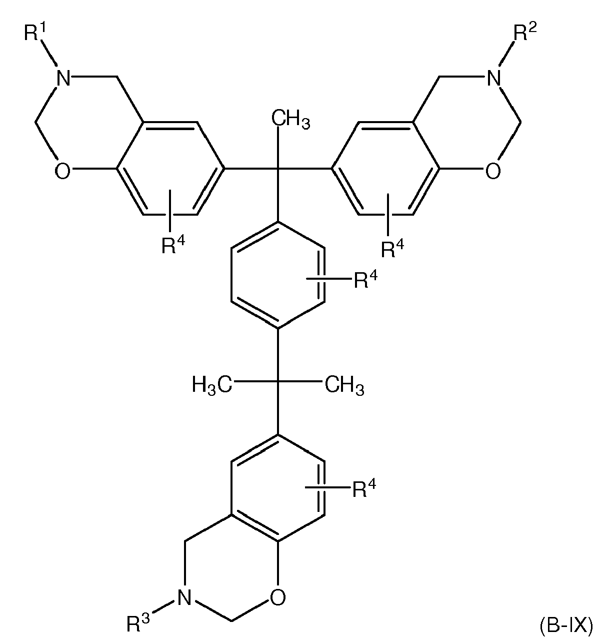 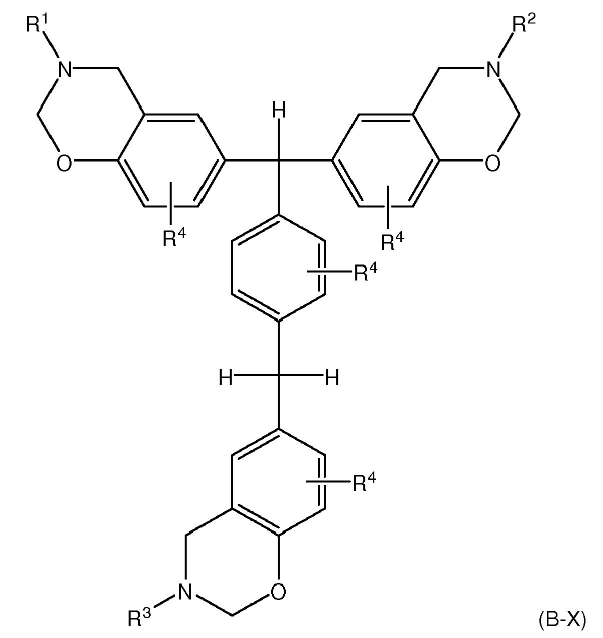 wherein R¹, R² and R⁴ are as defined above, and R³ is defined as R¹, R² or R⁴.

Specific examples of the above generically described benzoxazine compounds include:

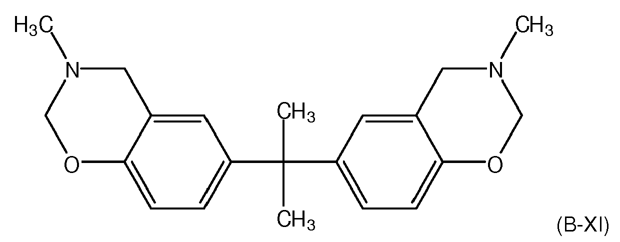

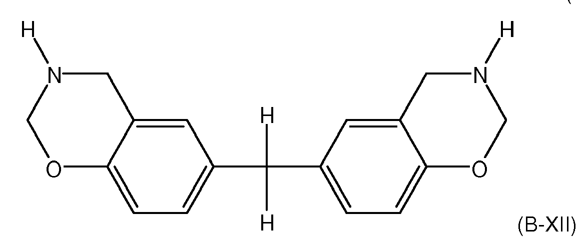

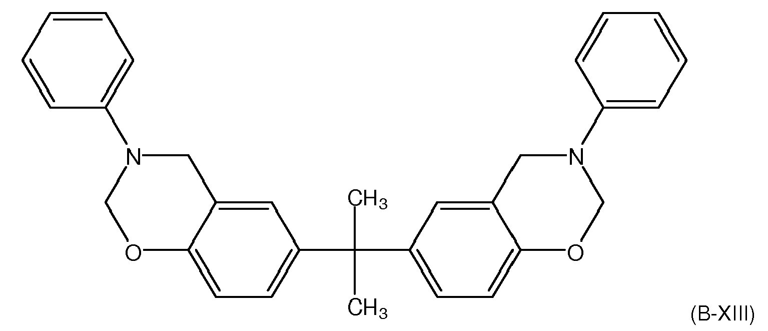

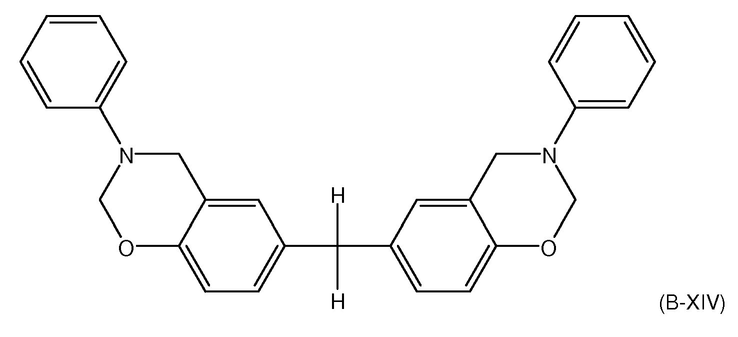

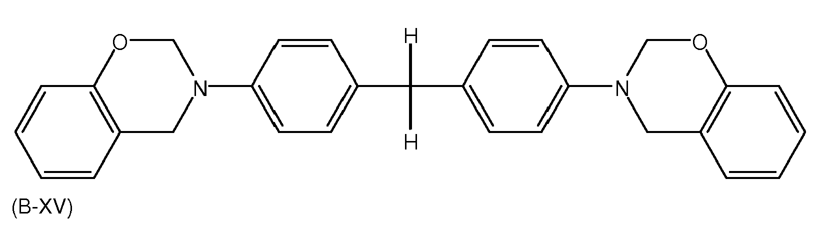

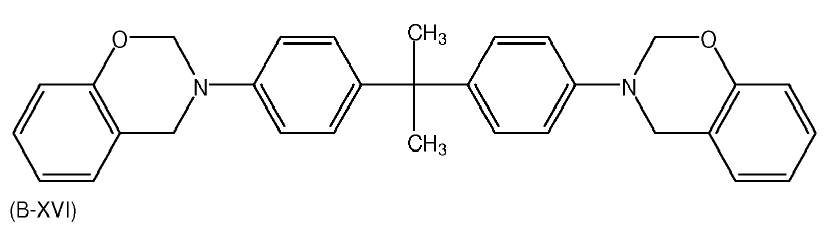

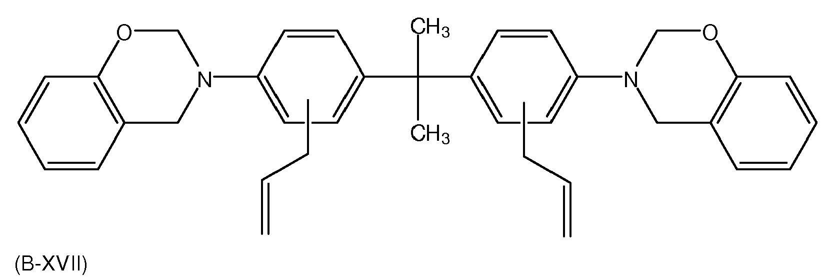

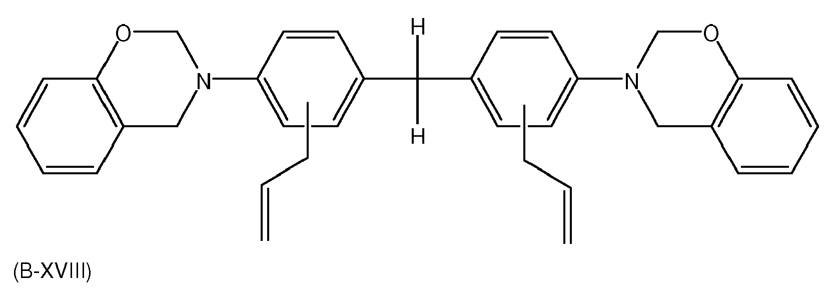

Different benzoxazine compounds may be used to practice the invention, such as combinations of multifunctional benzoxazines and monofunctional benzoxazines, or combinations of one or more multifunctional benzoxazines or one or more monofunctional benzoxazines.

Examples of monofunctional benzoxazine compounds may be embraced by the following structure (B-XIX): 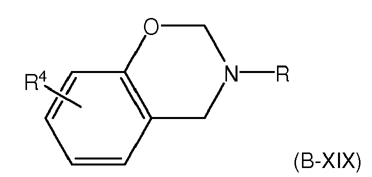 wherein R is alkyl, such as methyl, ethyl, propyl and butyl, alkenyl or aryl with or without substitution on one, some or all of the available substitutable sites, and R⁴ is selected from hydrogen, halogen, alkyl and alkenyl, or R⁴ is a divalent residue creating a naphthoxazine residue out of the benzoxazine structure.

For instance, monofunctional benzoxazine compounds may be embraced by general structure (B-XX): 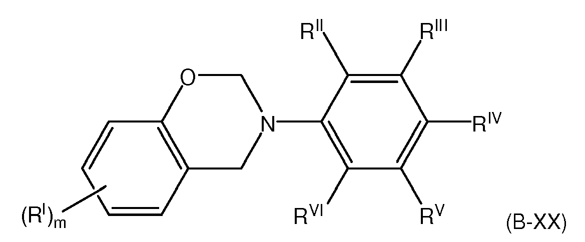 where in this case R¹ is selected from alkyl, alkenyl, each of which being optionally substituted or interrupted by one or more O, N, S, C=O, COO, and NHC=O, and aryl; m is 0 to 4; and R^{II}, R^{III}, R^{IV}, R^{V} and R^{VI} are independently selected from hydrogen, alkyl, alkenyl, each of which being optionally substituted or interrupted by one or more O, N, S, C=O, COOH, and NHC=O, and aryl.

Specific examples of such a monofunctional benzoxazine compounds are: 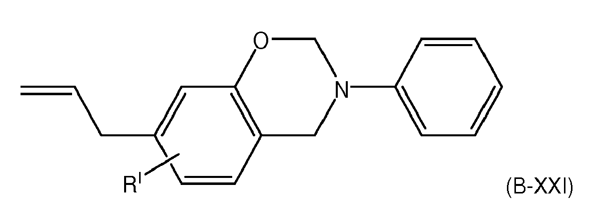 where R^{I} is as defined above; or

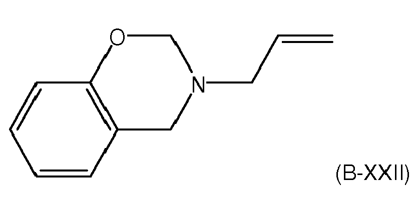

Benzoxazine compounds are presently available commercially from several sources, including Huntsman Advanced Materials; Georgia-Pacific Resins, Inc.; and Shikoku Chemicals Corporation, Chiba, Japan, the last of which offers among others Bisphenol A-aniline, Bisphenol A-methylamin, Bisphenol F-aniline benzoxazine resins.

In a particularly preferred embodiment of the present invention the benzoxazine compound is an "aliphatic benzoxazine", i.e. a benzoxazine having aliphatic residues bound to the nitrogen atoms of the benzoxazine residue, such as the compound of formula (B-XI) above. However in another preferred embodiment it can be desirable to use "aromatic benzoxazines", i.e. benzoxazines having aromatic residues bound to the nitrogen atoms of the benzoxazine residues such as the compounds of formulas (B-XV) or (B-XX). In some other preferred embodiments mixtures of the before-mentioned benzoxazines are advantageously employed.

If desired, however, instead of using commercially available sources, the benzoxazine compound may typically be prepared by reacting a phenolic compound, preferably selected from monophenols and/or diphenols such as biphenyl-4,4'-diol (also known as "4,4'-Biphenol"), Bisphenol A, Bisphenol P, Bisphenol M, Bisphenol F, Bisphenol S, Bisphenol AP, Bisphenol E, 4,4'-oxydiphenol, 4,4'-thiodiphenol, bis(4-hydroxyphenyl)methanone, biphenyl-2,2'-diol, 4,4'-(cyclohexane-1,1-diyl)diphenol or 4,4'-(3,3,5-trimethylcyclohexane-1,1-diyl)diphenol (Bisphenol TMC), with an aldehyde and an alkyl or aryl amine. U.S. Patent No. 5,543,516, hereby expressly incorporated herein by reference, describes a method of forming benzoxazines, where the reaction time can vary from a few minutes to a few hours, depending on reactant concentration, reactivity and temperature. See generally U.S. Patent Nos. 4,607,091 (Schreiber), 5,021,484 (Schreiber), 5,200,452 (Schreiber) and 5,443,911 (Schreiber).

Any of the before-mentioned benzoxazine compounds may contain partially ring-opened benzoxazine structures.

For the purpose of this invention those structures can in one embodiment still considered to be benzoxazine moieties, in particular ring-opened benzoxazine moieties.

However in another embodiment of the present invention it is preferred that in the equilibrium state between the ring-opened and the non ring-opend benzoxazine moieties more than 60%, preferably more than 75%, most preferably more than 95% of the benzoxazine moieties are in the non ring-opened state.

The benzoxazine compound is preferably the only curable ingredient in the curable compositions of the present invention. However other curable ingredients or resins can be included, if desired.

The at least one benzoxazine compound or mixtures of different benzoxazine compounds can be included in an amount in the range of 20 to 99.9 percent by weight, such as 40 to 98 percent by weight, desirably in an amount of 50 to 95 percent by weight, and more desirably in an amount of 60 to 90 percent by weight, based on the total amount of the curable composition of the present invention.

As noted above, the curable composition of the present invention additionally comprises at least one inorganic and/or organic lithium salt as a heat-latent or heat-activatable catalyst for the curing reaction of the at least one benzoxazine compound.

The term "lithium salt" as used in the present invention refers to compounds which consist of at least one negatively charged anion and at least one positively charged lithium cation. Explicitly not encompassed by this term are compounds in which the lithium atom is involved in one or more covalent bondings.

Although the valency of the counterions is in principle not restricted, better mechanical properties can be obtained if the counterion is a monovalent anion.

Furthermore it can be preferred that the counterion is selected from halogenide anions, pseudo-halogenide anions or anions which comprise at least one halogen atom.

Preferred halogenide anions according to the present invention include but are not limited to the chloride anion, the bromine anion, the iodide anion and the fluorine anion.

Preferred pseudo-halogenide anions according to the present invention include but are not limited to the cyanate anion, the thiocyanate anion and the isocyanate anion.

Preferred anions which comprise at least one halogen atom according to the present invention include anions which comprise the at least one halogen atom in either the oxidation state +VII or in the oxidation state -I. Preferred examples are the perchlorate anion, the tetrafluoroborat anion and the trifluoromethanesulfonic acid anion.

Further it has been found that the effects according to the present inventions are maximized if the counterion is selected from the chloride anion, the bromide anion or the iodide anion or from the anions comprising a chlorine atom, a bromine atom or an iodine atom.

In another preferred embodiment of the present invention the counterion is selected from anions which comprise at least one aromatic ring system, preferably an optionally substituted benzene ring. Preferred examples of this embodiment of the present invention include the phenolate anion as well as the thiophenolate anion.

Examples of preferred inorganic and/or organic lithium salts according to the present invention include - but are not limited to - lithium iodide, lithium chloride, lithium bromide, lithium perchlorate, lithium thiocyanate, lithium tetrafluoridoborate, lithium acetate, lithium phenolate, lithium thiophenolate, lithium trifluoromethanesulfonate, lithium methylbenzenesulfonate and lithium nitrate. Lithium iodide, lithium chloride, lithium bromide, lithium perchlorate, lithium thiocyanate, lithium tetrafluoridoborate, lithium acetate, lithium phenolate, lithium thiophenolate and lithium nitrate are particularly preferred lithium salts.

The at least one lithium salt of the present invention can be included in an amount in the range of 0.1 to 20 percent by weight, such as 0.2 to 5 percent by weight, desirably in an amount of 0.3 to 3 percent by weight, and more desirably in an amount of 0.5 to 1.5 percent by weight, based on the whole salt and on the total amount of the curable composition of the present invention.

The curable composition of the present invention may comprise the benzoxazine compound and the lithium salts in an amount that the molar ratio of benzoxazine moieties to lithium cations is in the range of 90:10 to 99.9:0.1, preferably in the range of 95:5 to 99.5:0.5. A higher amount of the lithium salts of the present invention could cause the deterioration of mechanical and thermal properties of the resulting cured reaction product, whereas a smaller amount of the lithium salts of the present invention could lead to inefficient curing reactions.

The curable compositions of the present invention may further comprise other resins apart from the benzoxazine compound, such as epoxy resins.

The term "epoxy resin", as used in the present invention, refers to any organic compound having at least two functional groups of the oxirane type which can be polymerized by ring opening. The term "epoxy resin" preferably denotes any conventional epoxy resin which is liquid at room temperature (23°C) or at a higher temperature. These epoxy resins can be monomeric or polymeric, on the one hand, aliphatic, cycloaliphatic, heterocyclic or aromatic, on the other hand.

The epoxy resins used in the present invention may include multifunctional epoxy- containing compounds, such as C₁-C₂₈ alkyl-, poly-phenol glycidyl ethers; polyglycidyl ethers of pyrocatechol, resorcinol, hydroquinone, 4,4'-dihydroxydiphenyl methane (or bisphenol F, such as RE-303-S or RE-404-S available commercially from Nippon Kayuku, Japan), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphenyl) methane; polyglycidyl ethers of transition metal complexes; chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms; phenol novolac epoxy; cresol novolac epoxy; and combinations thereof. Among the commercially available epoxy resins suitable for use in the present invention are polyglycidyl derivatives of phenolic compounds, such as those available under the tradenames EPON 825, EPON 826, EPON 828, EPON 1001, EPON 1007 and EPON 1009, cycloaliphatic epoxy-containing compounds such as Araldite CY179 from Huntsman or waterborne dispersions under the tradenames EPI-REZ 3510, EPI-REZ 3515, EPI-REZ 3520, EPI-REZ 3522, EPI-REZ 3540 or EPI-REZ 3546 from Hexion; DER 331, DER 332, DER 383, DER 354, and DER 542 from Dow Chemical Co.; GY285 from Huntsman, Inc.; and BREN-S from Nippon Kayaku, Japan. Other suitable epoxy resins include polyepoxides prepared from polyols and the like and polyglycidyl derivatives of phenol-formaldehyde novolacs, the latter of which are available commercially under the tradenames DEN 431, DEN 438, and DEN 439 from Dow Chemical Company and a waterborne dispersion ARALDITE PZ 323 from Huntsman. Cresol analogs are also available commercially such as ECN 1273, ECN 1280, ECN 1285, and ECN 1299 or waterborne dispersions ARALDITE ECN 1400 from Huntsman, Inc. SU-8 and EPI-REZ 5003 are bisphenol A-type epoxy novolacs available from Hexion.

Of course, combinations of the different epoxy resins are also desirable for use herein.

If present, the epoxy resin can be used in the curable composition of the present invention in an amount in the range of 0.1 to 60 percent by weight, more preferably in an amount of 5 to 50 and most preferably in an amount of 10 to 30 percent by weight, based on the total amount of the curable composition.

Additives suitable for use in the present invention include reactive diluents, for example styrene oxide (epoxide of styrene), butyl glycidyl ether, 2,2,4-trimethylpentyl glycidyl ether, phenyl glycidyl ether, cresyl glycidyl ether or glycidyl esters of synthetic, highly branched, mainly tertiary, aliphatic monocarboxylic acids, and oxazoline group containing compounds; tougheners; plasticizers; extenders; microspheres; fillers, such as silica nanoparticles and reinforcing agents, for example coal tar, bitumen, textile fibers, glass fibers, boron fibers, carbon fibers, mineral silicates, mica, powdered quartz, hydrated aluminum oxide, bentonite, wollastonite, kaolin, silica, aerogel or metal powders, for example aluminium powder or iron powder, and also pigments and dyes, such as carbon black, oxide colors and titanium dioxide; fire-retarding agents; thixotropic agents; flow control agents, such as silicones, waxes and stearates, which can, in part, also be used as mold release agents; adhesion promoters; antioxidants and light stabilizers, the particle size and distribution of many of which may be controlled to vary the physical properties and performance of the inventive curable composition.

If present, at least one additive or mixtures of different additives can be used in the curable composition of the present invention in an amount in the range of 0.1 to 30 percent by weight, more preferably in an amount of 2 to 20 percent by weight and most preferably in an amount of 5 to 15 percent by weight, based on the total amount of the curable composition.

In one embodiment of the present invention solvents can be used to lower the viscosity of the curable composition. Preferable solvents are ethers such as diethylether and tetrahydrofuran, ketones such as acetone and ethyl methyl ketone, esters such as ethyl acetate and butyl acetate, chlorinated hydrocarbons such as chloroform and dichloromethane, aromatics such as benzene and chlorobenzene, amides such as dimethylformamide and methylpyroridone, alcohols such as methanol and isopropanol. More preferably, ester-type solvents and ketone-type solvents are used.

In a typical embodiment of the present invention the curable composition comprises, based on the total amount of the composition:
a) from 20 to 99.9 percent by weight, more typically from 40 to 98 percent by weight, suitably from 50 to 95 percent by weight, for example from 60 to 90 percent by weight of at least one benzoxazine compound;
b) from 0.1 to 20 percent by weight, more typically from 0.2 to 5 percent by weight, suitably from 0.3 to 3 percent by weight, for example from 0.5 to 1.5 percent by weight of at least one inorganic and/or organic lithium salt of the present invention;
c) from 0 to 60 percent by weight, more typically from 5 to 50 percent by weight, suitably from 10 to 30 percent by weight, for example from 15 to 25 percent by weight of at least one epoxy resin; and
d) from 0 to 30 percent by weight, more typically from 2 to 20 percent by weight, suitably from 5 to 15 percent by weight, for example from 6 to 12 percent by weight of one or more additives.

By using the aforementioned inorganic and/or organic lithium salts of the present invention, a benzoxazine-based curable composition can be obtained which exhibits a long pot-life.

The term "pot-life" as used in the present invention refers to the length of time a curable composition retains a viscosity low enough for it to be suitable for processing.

In one embodiment of the present invention the curable composition is cured at temperatures of at least 120°C, preferably at temperatures in the range of about 130°C to about 160°C and/or at pressures between 1 to 100 atm, preferably between 1 to 5 atm, and more preferably under atmospheric pressure and/or preferably at curing times above 10 minutes, more preferably above 30 minutes and/or preferably at curing times below 180 minutes, more preferably below 120 minutes.

As noted, the curable compositions of the present invention are in particular suitable as matrices for the preparation of reinforced material such as prepregs and towpregs and/or can be used in injection molding or extrusion processes.

In this regard, the invention also provides a cured reaction product of the curable composition, in particular cured reaction products comprising a plurality of fabric plies or unidirectional plies infused with the inventive curable composition before curing.

The aforementioned cured reaction products comprising a plurality of fabric plies or unidirectional plies can in principle be produced by any method.

One preferred process for producing said cured reaction comprises the steps of:
(a) providing a curable composition of the present invention into a closed mold containing a preform, comprising a plurality of fabric plies or unidirectional plies;
(b) exposing the interior of the mold to a first temperature of 30°C to 125°C for a time sufficient to allow the curable composition to wet the preform;
(c) curing the curable composition-impregnated preform within the mold at a second temperature of more (or equal) than 130°C, to form the cured reaction product.

Preferably the aforementioned process is a resin transfer molding process (RTM), a vacuum assisted resin transfer molding process (VaRTM) or a resin film infusion process (RFI).

In connection with a vacuum assisted resin transfer molding process (VaRTM), the present invention provides a process whose steps comprise:
(a) providing a curable composition of the present invention in film form into a closed mold containing a preform, comprising a plurality of fabric plies or unidirectional plies;
(b) exposing the interior of the mold to a first temperature of 30°C to 125°C under vacuum for a time sufficient to allow the curable composition to wet the perform;
(c) curing the curable composition-impregnated preform within the mold at a second temperature of more (or equal) than 130°C under vacuum to form the cured reaction product.

In connection with a resin film infusion process (RFI), the present invention provides a process whose steps comprise:
(a) providing a preform into a closed mold containing an inventive curable composition in film form, where the preform comprises a plurality of fabric plies or unidirectional plies;
(b) exposing the interior of the mold to a first temperature of 30°C to 125°C optionally under vacuum for a time sufficient to allow the curable composition to wet the perform;
(c) curing the curable composition-impregnated preform within the mold at a second temperature of more (or equal) than 130°C under vacuum to form the cured reaction product.

The second temperature used in the processes described above is preferably in the range of 130°C to 160°C.

The fabric plies or unidirectional plies are preferably made of carbon, glass, aramid, boron, polyalkylene, quartz, polybenzimidazole, polyetheretherketone, polyphenylene sulfide, poly p-phenylene benzobisoaxazole, silicon carbide, phenolformaldehyde, phthalate and/or napthenoate.

The carbon can be selected from polyacrylonitrile, pitch and acrylic, and the glass can be selected from S glass, S2 glass, E glass, R glass, A glass, AR glass, C glass, D glass, ECR glass, glass filament, staple glass, T glass and zirconium oxide glass.

As noted, another aspect of the present invention is the use of at least one inorganic and/or organic lithium salt of the present invention as a heat-activatable catalyst for the curing reaction of benzoxazine compounds, wherein said benzoxazine compounds are preferably selected from benzoxazines of formula (B-I) to (B-XXII).

The invention is further illustrated by the following examples.

### EXAMPLES

### Example 1:

In a test tube 113 mg (0.5mmol) benzoxazine according to scheme 1 and the catalytic salt (1,0mol %) according to table 1 were dissolved in acetone (approx. 0.2ml) unless otherwise noted. The mixture was dried at room temperature under high vacuum for approx. 1 hour.

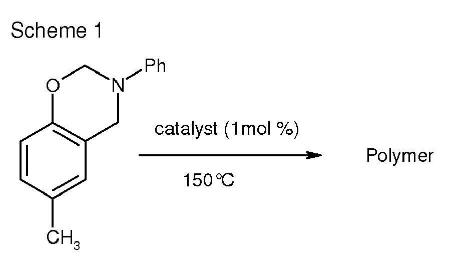

### a) NMR-Analysis

The vacuum dried samples were then heated to 150°C for 30 minutes to estimate the rate of ring-opening (conversion of monomer). The resulting cured mixtures were subjected to ¹H-NMR analysis in order to monitor the conversion of the benzoxazine monomer.

### b) DSC-Analysis

Furthermore 14 mg of the resulting vacuum dried non-cured mixture were placed in an aluminum pan and subjected to a dynamic differential scanning calorimeter (DSC) analysis.

The DSC measurements were performed at a heating rate of 10 °C/min under nitrogen atmosphere. From the resulting DSC profile, the temperature of the peak top (Tₘₐₓ) and the onset temperature (Tₒₙₛₑₜ) were determined.

Basically the DSC results have a good relation to the conversion of monomer: The higher the onset temperature, the lower the conversion.

The different catalysts were tested according to these procedures and the corresponding values of Tₒₙₛₑₜ and Tₘₐₓ were listed in Table 1.

**Table 1 :**

| Entry | Catalyst | Rate of ring opening (conversion of monomer^{a} after 0.5 h at 150°C) | Tₒₙₛₑₜ [°C]^{b} | Tₘₐₓ [°C] |
|---|---|---|---|---|
| 1 | -- | <5% | 262 | 269 |
| 2 | Lil | 100% | 180 | 197 |
| 3 | LiClO₄ | 92% | 207 | 219 |
| 4 | LiSCN | 77% | 226 | 237 |
| 5 | LiBr | 33% | 208 | 220 |
| 6 | LiOPh^{d} | 27% | 207 | 222 |
| 7 | LiSPh^{d} | 25% | 207 | 222 |
| 8 | LiOTf | ∼5% | 212 | 223 |
| 9 | LiBF₄ | ∼5% | 225 | 236 |
| 10 | LiOAc^{e} | <5% | 243 | 251 |
| 11 | LiCl^{e} | <5% | 238 | 247 |

| | | | | |
|---|---|---|---|---|
| ^{a} Determined by ¹H NMR in DMSO-d₆. ^{b} Onset temperature of the polymerization exotherm determined by DSC (10 °C/min). ^{c} Maximum temperature of the polymerization exotherm determined by DSC (10 °C/min). ^{d} Catalyst was pre-dissolved in THF. ^{e} Catalyst was pre-dissolved in MeOH. | | | | |

All lithium salts of example 1 show catalytic activity in the polymerization of the benzoxazine momoners. Especially lithiumiodide shows an excellent catalytic activity.

### Example 2:

The mechanical properties of plates obtained by curing of Epsilon^{®} 201 (thermosetting resin based on benzoxazine momomers) with 0,5weigth% of Lil solution (50weigth-% in acetone) under various conditions have been studied in a three-point-bending test according to ASTM-D790-97 (test speed: 0,05 inch/min; support span: 2 inch; diameter loading nose: 10mm). The resulting flexural moduli as well as the flexural strengths are given in table 2.

**Table 2:**

| | Flexural Modulus | Flexural Strength |
|---|---|---|
| | [MPa] | [MPa] |
| Cured for 90min at 180 °C | 3858 | 127 |
| Cured for 45min at 180 °C | 4121 | 169 |
| Cured for 90min at 160 °C | 3592 | 120 |
| Cured for 45min at 160 °C | 4312 | 116 |

From these data can be derived that Lil as a catalyst for benzoxazine-momoners leads even after short curing times at 160°C to a material showing satisfying mechanical properties.

## Claims

1. A curable composition comprising
a. at least one polymerization catalyst selected from salts comprising a least one lithium cation and at least one inorganic and/or organic anion and
b. at least one polymerizable benzoxazine resin.

2. The curable composition according to claim 1, wherein the anion is a monovalent anion.

3. The curable composition according to any of claims 1 or 2, wherein the anion is selected from halogenide anions, pseudo-halogenide anions or anions which comprise at least one halogen atom.

4. The curable composition according to claim 3, wherein the counterion is selected from the chloride anion, the bromide anion or the iodide anion or from the anions comprising at least one chlorine atom, at least one bromine atom or at least one iodine atom.

5. The curable composition according to any of claims 1 or 2, wherein the inorganic and/or organic anion is selected from anions comprising at least one aromatic ring system.

6. The curable composition according to any of claims 1 to 5, wherein the counterion is selected from the iodide anion, the chloride anion, the bromide anion, the perchlorate anion, the thiocyanate anion, the tetrafluoridoborate anion, the acetate anion, the trifluoromethanesulfonate anion, the methylbenzenesulfonate anion and the nitrate anion.

7. The curable composition of any one of claims 1 to 6, wherein the molar ratio of the benzoxazine moieties to the lithium cations is in the range of 90:10 to 99.9:0.1.

8. The curable composition according to any one of claims 1 to 7, comprising
a) from 20 to 99.9 percent by weight of at least one benzoxazine resin,
b) from 0.1 to 20 percent by weight of at least one salt comprising a least one lithium cation and at least one inorganic and/or organic anion,
c) from 0 to 60 percent by weight of at least one epoxy resin and
d) from 0 to 30 percent of at least one additive.

9. A cured reaction product of the curable composition according to any of claims 1 to 8.

10. The cured reaction product according to claim 9, comprising a plurality of fabric plies or unidirectional plies infused with the curable composition according to any of claims 1 to 8 before curing.

11. Use of at least one salt, comprising a least one lithium cation and at least one inorganic and/or organic anion, as catalyst, preferably as heat activatable catalyst, in curable compositions comprising at least one benzoxazine resin.

12. A process for producing the cured reaction product of claim 10, which comprises the following steps:
(a) providing a curable composition according to any one of Claims 1 to 8 into a closed mold containing a preform comprising a plurality of fabric plies or unidirectional plies;
(b) exposing the interior of the mold to a first temperature of 30°C to 125°C for a time sufficient to allow the curable composition to wet the preform;
(c) curing the curable composition-impregnated preform within the mold at a second temperature of at least 130°C to form the cured reaction product.

13. The process of Claim 12, wherein the process is a resin transfer molding process (RTM), a vacuum assisted resin transfer molding process (VaRTM) or a resin film infusion process (RFI).

14. Device coated with a cured reaction product according to any of claim 9 or 10.
